# EUROPÄISCHE PATENTANMELDUNG

(11) **EP 2 927 168 A1**
(43) Veröffentlichungstag der Anmeldung: **07.10.2015**
(21) Anmeldenummer: 14162950.1
(22) Anmeldetag: 31.03.2014
(51) Int. Cl.: B65G 54/02, G01N 35/00, G01N 35/04

(54) **Transportvorrichtung, Probenverteilungssystem und Laborautomatisierungssystem**

(71) Anmelder: Roche Diagnostics GmbH, 68305 Mannheim (DE); F. Hoffmann-La Roche AG, 4070 Basel (CH)
(72) Erfinder: Sinz, Achim, 71332 Waiblingen (DE); Riether, Christian, 71397 Leutenbach (DE)
(74) Vertreter: Patentanwälte Ruff, Wilhelm, Beier, Dauster & Partner

(57) **Zusammenfassung**

Die Erfindung betrifft eine Transportvorrichtung zur Aufnahme eines Probenbehälters und zum Transport des Probenbehälters auf einer Transportfläche, wobei die Transportvorrichtung magnetisch über die Transportfläche bewegt werden kann und weiter eine Kühlvorrichtung aufweist. Die Erfindung betrifft des Weiteren ein Probenverteilungssystem mit einer solchen Transportvorrichtung sowie ein Laborautomatisierungssystem.

## Beschreibung

Die Erfindung betrifft eine Transportvorrichtung zur Aufnahme eines Probenbehälters und zum Transportieren des aufgenommenen Probenbehälters zwischen präanalytischen, analytischen und/oder postanalytischen Stationen eines Laborautomatisierungssystems, ein Probenverteilungssystem und ein Laborautomatisierungssystem.

Die WO 2013/064656 A1 zeigt ein Probenverteilungssystem mit einer Anzahl von Transportvorrichtungen bzw. Probenträgern, die jeweils ein magnetisches Element aufweisen. Die Probenträger sind dazu ausgebildet, einen Probenbehälter, beispielsweise in Form eines Probenröhrchens, aufzunehmen. In den Probenbehältern sind zu analysierende Proben, beispielsweise Blutproben, enthalten. Das Probenverteilungssystem weist weiter eine Transporteinrichtung mit einer Transportfläche auf, die dazu ausgebildet ist, die Probenträger zu tragen. Das Probenverteilungssystem weist weiter eine Anzahl von elektromagnetischen Aktuatoren auf, die stationär unter der Transportfläche angeordnet sind. Die elektromagnetischen Aktuatoren sind dazu ausgebildet, einen jeweiligen Probenträger durch Ausüben einer magnetischen Kraft auf der Transportfläche zu bewegen. Eine Steuerungseinrichtung ist dazu ausgebildet, die elektromagnetischen Aktuatoren derart anzusteuern, dass sich ein jeweiliger Probenträger auf der Transportfläche entlang einer vorgebbaren Bewegungsbahn bewegt. Das Probenverteilungssystem dient zum Transportieren der Probenbehälter zwischen unterschiedlichen Stationen eines Laborautomatisierungssystems, wobei eine Bewegungsbahn typisch zwischen den unterschiedlichen Stationen verläuft.

### Aufgabe und Lösung

Es ist die Aufgabe der Erfindung, eine Transportvorrichtung, ein Probenverteilungssystem und ein Laborautomatisierungssystem bereitzustellen, die einen flexiblen Transport und eine flexible Verarbeitung von Proben ermöglichen, insbesondere im Hinblick auf dynamisch veränderliche Wartezeiten bis zu einer möglichen Be- und/oder Verarbeitung der Proben in den Stationen.

Dies wird erfindungsgemäß durch eine Transportvorrichtung nach Anspruch 1, ein Probenverteilungssystem nach Anspruch 8 und ein Laborautomatisierungssystem nach Anspruch 11 erreicht. Ausgestaltungen können beispielsweise den Unteransprüchen entnommen werden. Der Wortlaut sämtlicher Ansprüche wird durch ausdrückliche Inbezugnahme zum Inhalt der Beschreibung gemacht.

Die Erfindung betrifft eine Transportvorrichtung zur Aufnahme mindestens eines Probenbehälters, beispielsweise in Form eines (Proben-) Röhrchens, und zum Transportieren des aufgenommenen Proben behälters zwischen präanalytischen, analytischen und/oder postanalytischen Stationen eines Laborautomatisierungssystems. Die Transportvorrichtung kann beispielsweise ein Probenträger sein.

Eine präanalytische Station dient üblicherweise der Vorverarbeitung von Proben bzw. Probenbehältern.

Eine analytische Station kann beispielsweise dazu ausgebildet sein, eine Probe oder einen Teil der Probe und ein Reagenz zu verwenden, um ein messbares Signal zu erzeugen, auf Basis dessen bestimmbar ist, ob und gegebenenfalls in welcher Konzentration der Analyt vorhanden ist.

Eine postanalytische Station dient üblicherweise der Nachverarbeitung von Proben bzw. Probenbehältern.

Die präanalytischen, analytischen und postanalytischen Stationen können beispielsweise mindestens eine Station aus der Menge folgender Stationen aufweisen: eine Kappenentfernungsstation zum Entfernen von Kappen bzw. Verschlüssen auf Probenröhrchen, eine Kappenaufbringstation zum Aufbringen von Kappen bzw. Verschlüssen auf Probenröhrchen, eine Aliquotierstation zum Aliquotieren von Proben, eine Zentrifugierstation zum Zentrifugieren von Proben, eine Archivierstation zum Archivieren von Proben, eine Pipettierstation zum Pipettieren, eine Sortierstation zum Sortieren von Proben bzw. Probenröhrchen, eine Probenröhrchentypbestimmungsstation zum Bestimmen eines Typs eines Probenröhrchens und eine Probenqualitätsbestimmungsstation zum Bestimmen einer Probenqualität.

Die Transportvorrichtung weist mindestens ein magnetisch wirksames Element auf, beispielsweise in Form eines oder mehrerer Permanentmagnete und/oder in Form von ferromagnetischem Material. Das magnetische Element ist dazu ausgebildet, mit einem mittels mindestens eines elektromagnetischen Aktuators erzeugten Magnetfeld derart wechselzuwirken, dass eine Antriebskraft auf die Transportvorrichtung bzw. das magnetisch wirksame Element bewirkt wird. Die Transportvorrichtung weist weiter eine Kühlvorrichtung auf, die dazu ausgebildet ist, einen in der Transportvorrichtung aufgenommenen Probenbehälter zu kühlen.

Mittels der erfindungsgemäßen Transportvorrichtung ist es möglich, Proben eine längere Zeit auf der Transportfläche zu belassen als mit einer herkömmlichen Transportvorrichtung, welche nicht über eine Kühlvorrichtung verfügt. Mittels der Kühlvorrichtung kann die Temperatur der Probe abgesenkt werden, so dass die meisten chemischen Prozesse verlangsamt werden. Dies zögert die unerwünschten chemischen Veränderungen in der Probe, welche das Analyseergebnis verfälschen können, hinaus.

Es sei verstanden, dass in einer typischen Transportvorrichtung eine einzelne Kühlvorrichtung vorhanden ist. Es können jedoch auch mehrere Kühlvorrichtungen, beispielsweise zwei oder drei Kühlvorrichtungen, beispielswiese unterschiedlichen Typs, in einer jeweiligen Transportvorrichtung vorgesehen sein.

Gemäß einer Ausführung weist die Kühlvorrichtung einen Behälter zur Aufnahme einer Substanz auf. Dabei handelt es sich bevorzugt um eine chemische Substanz. Es kann sich um eine reine Substanz oder um ein Gemisch aus unterschiedlichen Substanzen handeln. Eine solche Substanz kann dazu ausgebildet sein, bei einer Reaktion Wärme aufzunehmen. Dies ermöglicht eine Kühlung der Probe durch die chemische Reaktion der Substanz, welche der Probe Wärme entzieht.

Die Substanz kann bei einer Temperatur zwischen etwa -20° C und etwa 0° C einen Phasenübergang zwischen fester und flüssiger Phase vollziehen. Ein solcher Phasenübergang erfordert üblicherweise besonders viel Energie, welche der Umgebung, im vorliegenden Fall also hauptsächlich der Probe, entzogen wird. Dies ermöglicht eine besonders effiziente Kühlung der Probe.

Bei einer solchen Substanz handelt es sich beispielsweise um Salzwasser oder um ein Gel. Derartige Substanzen haben geeignete Phasenübergangstemperaturen und benötigen für einen solchen Phasenübergang viel Wärme.

Gemäß einer Ausführung weist die Kühlvorrichtung einen Latentwärmespeicher auf. Hierbei handelt es sich typischerweise um einen in der Transportvorrichtung angeordneten Körper, welcher bei einer bestimmten Temperatur einen Phasenübergang vollziehen kann. Bei einem solchen Phasenübergang wird Energie benötigt, welche der Umgebung entzogen wird. Diese Energie wird vorliegend im Wesentlichen der Probe entzogen, was eine besonders effiziente Kühlung ermöglicht.

Gemäß einer Ausführung weist die Kühlvorrichtung einen Behälter zur Aufnahme einer kryogenen Flüssigkeit auf. Ein solcher Behälter ist typischerweise zur Umgebung hin besonders gut isoliert ausgeführt, so dass ein möglichst geringer Teil der kryogenen Flüssigkeit aufgrund von außen zugeführter Wärme verdampft. Vielmehr soll ein Wärmeeintrag in die kryogene Flüssigkeit möglichst ausschließlich von der Probe erfolgen. Damit kann eine besonders gute Kühlung der Probe erreicht werden.

Beispielsweise weist ein Behälter zur Aufnahme einer kryogenen Flüssigkeit eine Ummantelung auf, welche evakuiert ist. Damit kann eine unerwünschte Wärmeleitung besonders gut unterbunden werden.

Der Behälter zur Aufnahme einer kryogenen Flüssigkeit kann dazu ausgebildet sein, flüssigen Stickstoff aufzunehmen. Er kann auch dazu ausgebildet sein, flüssiges Helium aufzunehmen. Stickstoff hat im Vergleich zu Helium einen verhältnismäßig hohen Siedepunkt, ist jedoch deutlich preiswerter und einfacher zu handhaben als flüssiges Helium. Flüssiges Helium bietet dagegen den Vorteil eines besonders niedrigen Siedepunkts.

Der Behälter zur Aufnahme einer kryogenen Flüssigkeit kann mit einer kryogenen Flüssigkeit, wie beispielsweise flüssigem Stickstoff oder flüssigem Helium, gefüllt sein. Damit kann die gewünschte Kühlwirkung erreicht werden.

Gemäß einer Ausführung weist die Kühlvorrichtung ein Peltierelement sowie eine zugehörige Energieversorgungseinheit auf. Die Energieversorgungseinheit ist zur Versorgung des Peltierelements mit Betriebsenergie ausgebildet. Mittels eines solchen Peltier-Elements kann eine leise und effiziente Kühlung der Probe erreicht werden. Außerdem ist der Platzbedarf von Peltier-Elementen typischerweise relativ gering. Die Ausführung mit einem Peltierelement bietet zudem den Vorteil, dass es die Kühlung grundsätzlich zeitlich unbegrenzt aufrechterhalten kann, sofern laufend elektrische Energie über die Energieversorgungseinheit zugeführt wird.

Gemäß einer Ausführung weist die Kühlvorrichtung eine Wärmepumpe und eine zugehörige Energieversorgungseinheit auf. Die Verwendung einer Wärmepumpe kann im Vergleich zur Verwendung eines Peltierelements insbesondere Vorteile hinsichtlich des Wirkungsgrads haben.

Eine Energieversorgungseinheit kann bevorzugt eine Energieaufnahmeeinheit aufweisen, die dazu ausgebildet ist, drahtlos Energie aufzunehmen. Hierbei kann es sich beispielsweise um eine Induktionsspule handeln. Die Energie wird dabei typischerweise von einer Energieübertragungseinheit emittiert, welche außerhalb der Transportvorrichtung angeordnet ist. Beispielsweise kann die Energieübertragungseinheit unterhalb einer Transportfläche angeordnet sein. Sie kann beispielsweise durch eine Anordnung aus mehreren Spulen oder durch eine ausreichend große Spule gebildet sein, wodurch ein magnetisches Wechselfeld erzeugt wird.

Die Transportvorrichtung kann thermische Isoliermittel aufweisen, die dazu ausgebildet sind, einen in der Transportvorrichtung aufgenommenen Probenbehälter thermisch von seiner Umgebung zu isolieren. Damit kann die benötigte Kühlleistung verringert werden, weil mittels der Isoliermittel ein Wärmeeintrag in die Probe verringert wird. Dies verringert auch die Energiemenge, welche der Probe wieder entzogen werden muss, um eine bestimmte unterhalb der Raumtemperatur liegende Temperatur aufrechtzuerhalten. Des Weiteren kann mittels der Isoliermittel erreicht werden, dass mehr Wärmefluss von der Probe zur Kühlvorrichtung erfolgt, wohingegen Wärmefluss von der Umgebung zur Kühlvorrichtung unterdrückt wird.

Die Erfindung betrifft des Weiteren ein Probenverteilungssystem. Das Probenverteilungssystem weist eine Anzahl von erfindungsgemäßen Transportvorrichtungen auf, beispielsweise einige zehn bis einige hundert Transportvorrichtungen bzw. Probenträger.

Das Probenverteilungssystem weist weiter eine Transportfläche auf, die dazu ausgebildet ist, die Transportvorrichtungen zu tragen.

Das Probenverteilungssystem weist weiter eine Anzahl von elektromagnetischen Aktuatoren auf, die stationär unter der Transportfläche angeordnet sind, wobei die elektromagnetischen Aktuatoren dazu ausgebildet sind, eine Transportvorrichtung, die auf der Transportfläche angeordnet ist, durch Ausüben einer magnetischen Kraft auf die Transportvorrichtung zu bewegen.

Das Probenverteilungssystem weist weiter eine Steuerungseinrichtung auf, die dazu ausgebildet ist, die elektromagnetischen Aktuatoren derart anzusteuern, dass sich eine jeweilige Transportvorrichtung auf der Transportfläche entlang einer vorgebbaren, insbesondere zweidimensionalen, Bewegungsbahn bewegt.

Bei der Transportfläche kann es sich um eine ebene Fläche handeln, unterhalb der die elektromagnetischen Aktuatoren angeordnet sind.

Bei der magnetisch wirksamen Einheit kann es sich um einen Permanentmagneten und/oder um ferromagnetisches Material handeln. Dies ermöglicht eine einfache und zuverlässige Ausführung.

Unter einer Anzahl von Transportvorrichtungen seien eine Transportvorrichtung oder mehrere Transportvorrichtungen verstanden. Es kann grundsätzlich eine beliebige Anzahl von Transportvorrichtungen Bestandteil des Probenverteilungssystems sein.

Ein erfindungsgemäßes Probenverteilungssystem ermöglicht es, die weiter oben mit Bezug auf die erfindungsgemäße Transportvorrichtung beschriebenen Vorteile für ein Probenverteilungssystem nutzbar zu machen. Dabei kann auf alle beschriebenen Ausführungen und Varianten zurückgegriffen werden. Erläuterte Vorteile gelten entsprechend.

Die elektromagnetischen Aktuatoren können als Elektromagnete ausgebildet sein, welche einfach und präzise angesteuert und umgepolt werden können, so dass sie ein definiertes Magnetfeld ausbilden. Damit kann in Zusammenwirkung mit der magnetisch wirksamen Einheit einer jeweiligen Transportvorrichtung die Transportvorrichtung bewegt werden.

Die Steuerungseinrichtung kann als elektronische Steuerungseinrichtung ausgebildet sein. Dabei kann es sich beispielsweise um einen Computer, einen Mikroprozessor oder eine speicherprogrammierbare Steuerung handeln. Die Steuereinrichtung kann Prozessormittel und Speichermittel aufweisen, wobei in den Speichermitteln Programmcode gespeichert ist, bei dessen Ausführung die Prozessormittel sich in definierter Weise verhalten.

Das Probenverteilungssystem weist gemäß einer Ausführung eine Kühlkammer zur Aufnahme von Transportvorrichtungen auf, die dazu ausgebildet ist, darin enthaltene Transportvorrichtungen und/oder deren Kühlvorrichtungen zu kühlen. Dies erlaubt es, eine in einer Transportvorrichtung enthaltene Kühlvorrichtung in der Kühlkammer zu reaktivieren, wenn beispielsweise deren Kühlkapazität erschöpft ist. Die entsprechende Transportvorrichtung kann anschließend wieder zum Aufnehmen, Transportieren und Kühlen von Proben verwendet werden.

Bevorzugt weist die Kühlkammer Mittel zum Kühlen von Luft in der Kühlkammer auf, wobei in der Kühlkammer weiter bevorzugt eine Temperatur vorherrscht, welche etwa 5 K bis 10 K unter der Umgebungstemperatur liegt. Beispielsweise können die Mittel zum Kühlen von Luft in Form einer üblichen Klimaanlage ausgebildet sein. Durch Verbringen einer Transportvorrichtung mit entsprechender Kühlvorrichtung, beispielsweise mit einem Latentwärmespeicher, in die Kühlkammer, kann die Kühlvorrichtung gekühlt werden und damit ihre Kühlkapazität zum Kühlen von Proben erlangen.

Gemäß einer Ausführung weist das Probenverteilungssystem eine Energieübertragungseinheit zum drahtlosen Übertragen von Energie auf eine Transportvorrichtung auf. Es kann sich dabei um eine Anordnung von Induktionsspulen handeln. Eine solche Ausführung ist vorteilhaft, wenn sich eine entsprechende Spule in der Transportvorrichtung befindet, die als Energieaufnahmeeinheit ausgebildet ist. Insgesamt ist es somit möglich, Energie auf eine Transportvorrichtung zu übertragen, wobei diese Energie dazu genutzt werden kann, eine Kühlvorrichtung in der Transportvorrichtung, welche elektrische Energie zum Betrieb benötigt, also beispielsweise ein Peltierelement, zu betreiben.

Das Probenverteilungssystem weist gemäß einer Ausführung Mittel zum Einfüllen einer kryogenen Flüssigkeit und/oder von Chemikalien in ein jeweiliges Gefäß einer jeweiligen Transportvorrichtung auf. Dies ist besonders dann vorteilhaft, wenn sich in zumindest einer Transportvorrichtung, welche in dem Probenverteilungssystem verwendet wird, ein entsprechendes Gefäß bzw. ein entsprechender Behälter zur Aufnahme einer kryogenen Flüssigkeit oder einer Chemikalie bzw. Substanz befindet. Damit kann die Kühlkapazität einer solchen Transportvorrichtung wiederhergestellt werden.

Das Laborautomatisierungssystem weist eine Anzahl (beispielsweise zwischen zwei und zwanzig) von präanalytischen und/oder analytischen und/oder postanalytischen Stationen auf, die dazu ausgebildet sind, Probenbehälter und/oder Proben, die in den Probenbehältern enthalten sind, zu bearbeiten oder zu verarbeiten. Das Bearbeiten bzw. Verarbeiten kann beispielsweise ein Lesen eines Barcodes, ein Entfernen einer Kappe auf dem Röhrchen, eine Zentrifugieren der Probe, ein Aliquotieren der Probe, ein Analysieren der Probe usw. umfassen. Das Laborautomatisierungssystem weist weiter ein oben genanntes Probenverteilungssystem zum Transportieren der Probenbehälter zwischen den präanalytischen, analytischen und postanalytischen Stationen auf.

Die Steuerungseinrichtung des Probenverteilungssystems kann dazu ausgebildet sein, eine Wartezeit zu bestimmen, bis ein jeweiliger Probenbehälter und/oder eine in dem jeweiligen Probenbehälter enthaltene Probe mittels einer Station bearbeitbar ist.

Bei der Wartezeit kann es sich insbesondere um eine voraussichtliche, geplante und/oder theoretische Wartezeit handeln. Die Wartezeit wird im Wesentlichen durch eine Wartezeit des entsprechenden Probenbehälters und/oder der darin enthaltenen Probe auf eine Bearbeitung/Verarbeitung in der präanalytischen, analytischen und postanalytischen Station bestimmt. Die Wartezeit kann beispielsweise unter Verwendung bestimmter Formeln und/oder Tabellen berechnet oder ermittelt werden. Im einfachsten Fall lässt sich die Wartezeit aus der Länge einer Warteschlange vor einer Station ermitteln.

Das Probenverteilungssystem bzw. das Laborautomatisierungssystem kann Mittel zum Aktivieren der Kühlvorrichtung einer Transportvorrichtung aufweisen, die betätigt werden, wenn die Wartezeit der Transportvorrichtung einen Schwellenwert übersteigt. Dies ermöglicht es, Proben normalerweise ohne besondere Kühlung auf dem Probenverteilungssystem zu belassen und zu entsprechenden Analysestationen zu verteilen, sofern deren voraussichtliche Wartezeit noch nicht kritisch ist. Erst dann, wenn eine Probe zu lang auf dem Probenverteilungssystem bleiben muss, wird die entsprechende Kühlvorrichtung aktiviert. Damit kann Energie eingespart werden.

Beispielsweise können die Mittel zum Aktivieren der Kühlvorrichtung eine Energieversorgung aktivieren, um eine auf einem Peltierelement basierende Kühlvorrichtung in einer Transportvorrichtung zu aktivieren. Die Mittel zum Aktivieren der Kühlvorrichtung können beispielsweise auch eine Transportvorrichtung in eine Kühlkammer, beispielsweise wie weiter oben beschrieben, fahren und dabei die Kühlvorrichtung kühlen und somit aktivieren. Die Mittel zum Aktivieren der Kühlvorrichtung können beispielsweise auch veranlassen, dass eine kryogene Flüssigkeit, wie beispielsweise flüssiger Stickstoff oder flüssiges Helium oder eine geeignete chemische Substanz, in die Kühlvorrichtung der Transportvorrichtung gefüllt wird. All dies kann dazu dienen, eine definierte Kühlkapazität für die Probe bereitzustellen, so dass diese ohne chemische Veränderung längere Zeit auf der Transportfläche des Probenverteilungssystems verbleiben kann.

### Kurze Beschreibung der Zeichnung

Die Erfindung wird nachfolgend unter Bezugnahme auf die Zeichnungen detailliert beschrieben. Hierbei zeigen schematisch:
- Fig. 1: eine Transportvorrichtung gemäß einem ersten Ausführungsbeispiel,
- Fig. 2: eine Transportvorrichtung gemäß einem zweiten Ausführungsbeispiel,
- Fig. 3: eine Transportvorrichtung gemäß einem dritten Ausführungsbeispiel,
- Fig. 4: eine Transportvorrichtung gemäß einem vierten Ausführungsbeispiel,
- Fig. 5: ein Probenverteilungssystem.

### Detaillierte Beschreibung der Ausführungsbeispiele

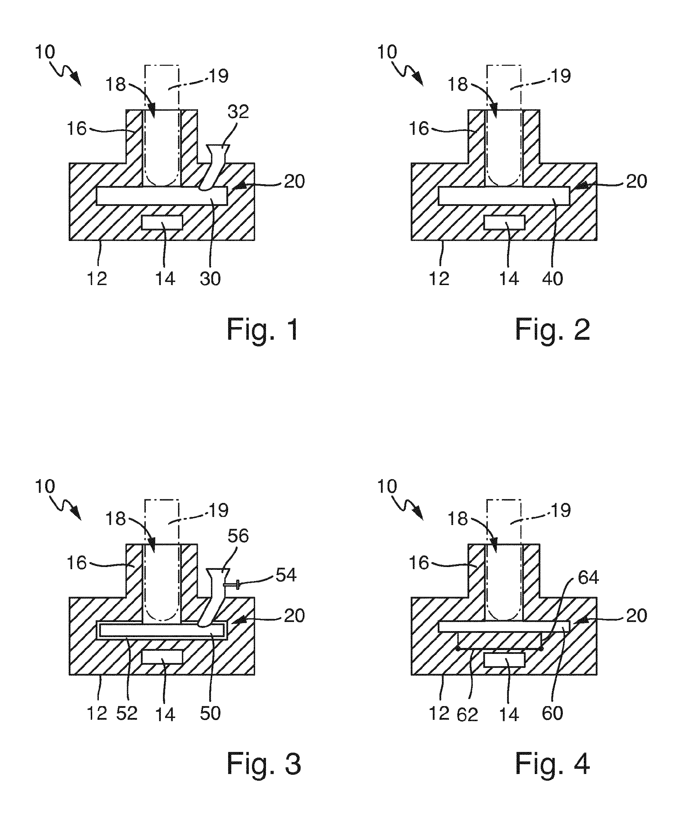

Die Fig.1 bis 4 zeigen jeweilige Transportvorrichtungen 10 gemäß erster bis vierter Ausführungsbeispiele in jeweiliger seitlicher Schnittansicht. Die Transportvorrichtungen 10 sind dabei insbesondere äußerlich im Wesentlichen identisch aufgebaut.

Die Transportvorrichtungen 10 weisen jeweils eine Unterseite 12 auf, mit der die Transportvorrichtung 10 auf einer Transportfläche eines Probenverteilungssystems aufliegen und über diese Transportfläche gleiten kann. Über der Unterseite 12 ist ein Permanentmagnet 14 angeordnet, der es erlaubt, durch das Vorsehen eines externen Magnetfelds eine Kraft auf die Transportvorrichtung 10 auszuüben. Damit kann die Transportvorrichtung 10 mittels einer geeigneten Ansteuerung von Elektromagneten eines Probenverteilungssystems über die Transportfläche bewegt werden.

Oberseitig weisen die Transportvorrichtungen 10 jeweils einen isolierenden Ring 16 auf, in dem mittig eine Probenaufnahme 18 ausgebildet ist. Die Probenaufnahme 18 ist dabei als Vertiefung in dem isolierenden Ring 16 ausgebildet, so dass ein Probenbehälter in Form eines Probenröhrchens 19 in die Probenaufnahme 18 hineingesteckt und dort gehalten werden kann. Der isolierende Ring 16 verhindert seitlichen Wärmeeintrag in das Probenröhrchen 19 und in eine darin befindliche, meist flüssige Probe.

Die jeweilige Transportvorrichtung 10 weist weiter eine jeweilige Kühlvorrichtung 20 auf. Die Transportvorrichtungen 10 gemäß der ersten bis vierten Ausführungsbeispiele unterscheiden sich hinsichtlich ihrer jeweiligen Kühlvorrichtung 20, wie nachfolgend näher erläutert wird.

Die Probenaufnahme 18 endet unmittelbar über der jeweiligen Kühlvorrichtung 20 der Transportvorrichtung 10, so dass in dem Fall, dass die Kühlvorrichtung 20 eine Kühlfunktion ausübt, Wärme aus dem in der Probenaufnahme 18 enthaltenen Probenröhrchen 19 und einer darin befindlichen Probe abgezogen wird.

Bei der Transportvorrichtung 10 gemäß dem in Fig. 1 dargestellten ersten Ausführungsbeispiel weist die Kühlvorrichtung 20 ein Gefäß bzw. einen Behälter 30 zur Aufnahme einer chemischen Substanz auf. Der Behälter 30 ist mit einem Einfüllstutzen 32 verbunden, über den eine chemische Substanz in die Behälter 30 eingefüllt werden kann. Bei einer solchen Substanz kann es sich beispielsweise um ein Gel mit mehreren Chemikalien handeln, welche bei einer Reaktion miteinander Wärme aufnehmen. Es handelt sich also um eine endotherme Reaktion. Beispielsweise kann hierfür eine Mischung aus Natron und Weinsäure oder Zitronensäure in Wasser verwendet werden. Nach dem Ende der Reaktion ist üblicherweise eine Neubefüllung des Behälters 30 angezeigt, um die Kühlkapazität wieder herzustellen.

Bei der Transportvorrichtung 10 gemäß dem in Fig. 2 dargestellten zweiten Ausführungsbeispiel weist die Kühlvorrichtung 20 einen Latentwärmespeicher 40 auf, welcher einen Phasenübergang vollziehen kann, der Energie aufnimmt. Im Unterschied zu den meisten chemischen Reaktionen, wie sie in einer Probenvorrichtung 10 gemäß dem ersten Ausführungsbeispiel verwendet werden können, handelt es sich hierbei um einen reversiblen Phasenübergang. Dies ermöglicht es, durch Kühlung der Transportvorrichtung 10 gemäß dem zweiten Ausführungsbeispiel, beispielsweise in einer Kühlkammer, den erwähnten endothermen Phasenübergang rückgängig zu machen und damit die Kühlkapazität des Latentwärmespeichers 40 wiederherzustellen. Beispielsweise kann für den Latentwärmespeicher 40 salzhaltiges Wasser verwendet werden.

Bei der Transportvorrichtung 10 gemäß dem in Fig. 3 dargestellten dritten Ausführungsbeispiel weist die Kühlvorrichtung 20 einen Behälter 50 zur Aufnahme kryogener Flüssigkeiten auf. Der Behälter 50 weist dabei eine Isolierung 52 in Form eines evakuierten Raums auf, welche dafür sorgt, dass ein Wärmeeintrag in eine in dem Behälter 50 enthaltene kryogene Flüssigkeit möglichst nur von einem in der Probenaufnahme 18 enthaltenen Probenröhrchen 19 erfolgt.

Zum Befüllen des Behälters 50 mit einer kryogenen Flüssigkeit ist ein Einfüllstutzen 56 vorgesehen. Um ein Auslaufen der kryogenen Flüssigkeit 50 nach dem Einfüllen zu verhindern und außerdem einen unerwünschten Wärmeeintrag in die kryogene Flüssigkeit von außerhalb zu verhindern, ist weiterhin ein Schieber 54 vorgesehen, mit welchem der Einfüllstutzen 56 verschlossen werden kann.

Bei der Transportvorrichtung 10 gemäß dem in Fig. 4 dargestellten vierten Ausführungsbeispiel weist die Kühlvorrichtung 20 ein Peltierelement 60 sowie eine Energieversorgungseinrichtung in Form einer Spule 62 auf, wobei das Peltierelement 60 und die Spule 62 mit elektrischen Leitungen 64 verbunden sind. Dies ermöglicht es, durch Anlegen eines externen magnetischen Wechselfelds einen Strom in der Spule 62 zu induzieren, welcher über Leitungen 64 zum Peltierelement 60 übertragen wird. Damit kann das Peltierelement 60 eine kühlende Funktion zu der Probenaufnahme 18 hin ausüben und somit ein darin aufgenommenes Probenröhrchen mit einer darin enthaltenen Probe kühlen. Es sei verstanden, dass hierfür noch eine Gleichrichterschaltung erforderlich ist, welche in Fig. 4 nicht dargestellt ist.

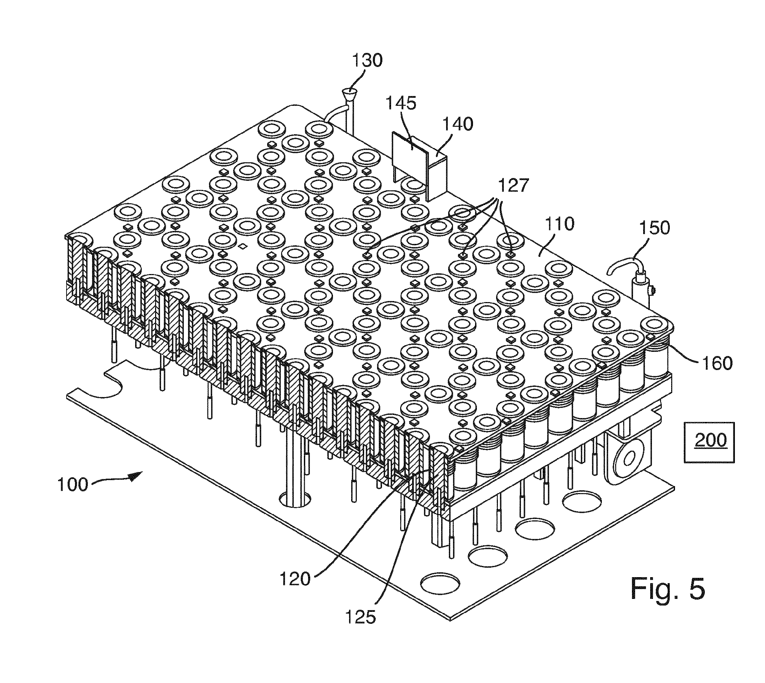

Fig. 5 zeigt ein Probenverteilungssystem 100. Das Probenverteilungssystem 100 weist eine Transportfläche 110 auf, auf der Transportvorrichtungen, beispielsweise eine Transportvorrichtung 10 gemäß einer der Fig. 1 bis 4, aufgesetzt werden können und auf der diese gleiten können. Zur Vereinfachung ist in Fig. 5 keine Transportvorrichtung 10 dargestellt, diesbezüglich sei auf die Fig. 1 bis 4 verwiesen.

Das Probenverteilungssystem 100 ist Bestandteil eines Laborautomatisierungssystems mit einer Anzahl von nicht näher dargestellten präanalytischen, analytischen und postanalytischen Stationen, die angrenzend an die Transportfläche 15 angeordnet sind. Das Probenverteilungssystem 10 dient zum Transportieren der Probenbehälter zwischen diesen Stationen.

Unterhalb der Transportfläche 110 ist eine Anzahl von spulenförmigen Elektromagneten 120 mit jeweiligen ferromagnetischen Kernen 125 vorgesehen. Mittels dieser Elektromagnete 120, welche einzeln ansteuerbar sind, können Transportvorrichtungen 10 mittels ihrer jeweiligen Permanentmagnete 14 über die Transportfläche 110 bewegt werden. Zur Ermittlung einer jeweiligen Position einer Transportvorrichtung 10 sind auf der Transportfläche 110 weiter Sensoren 127 vorgesehen.

Die Elektromagnete 120 und die Sensoren 127 sind mit einer Steuerungseinrichtung 200 verbunden, welche nicht näher dargestellte Prozessormittel und Speichermittel aufweist und welche die Transportvorrichtungen 10 über die Transportfläche 110 mittels der Elektromagnete 120 bewegen kann.

Das Probenverteilungssystem 100 weist weiter diverse Mittel auf, mit welchen Kühlvorrichtungen 20 in jeweiligen Transportvorrichtungen 10 aktiviert werden können.

Das Probenverteilungssystem 100 weist einen Einfüllstutzen 130 auf, welche ein Gemisch chemischer Substanzen zur Befüllung eines Gefäßes bzw. Behälters 30 in einen Einfüllstutzen 32 abgeben kann. Damit kann die Kühlvorrichtung 20 einer Transportvorrichtung 10 gemäß dem ersten Ausführungsbeispiel befüllt und damit aktiviert werden.

Das Probenverteilungssystem 100 weist weiter eine Kühlkammer 140 auf, welche durch eine automatisch betätigbare Schiebetür 145 verschlossen werden kann. Wenn eine Transportvorrichtung 10 gemäß dem zweiten Ausführungsbeispiel in die Kühlkammer 140 gefahren wird, wird der endotherme Phasenübergang des Latentwärmespeichers 40 rückgängig gemacht, so dass der Latentwärmespeicher 40 wieder zum Kühlen geeignet ist.

Das Probenverteilungssystem 100 weist weiter eine Befüllstation 150 für kryogene Flüssigkeiten auf, welche dazu ausgebildet ist, flüssigen Stickstoff in ein Gefäß 50 einer Transportvorrichtung 10 gemäß dem dritten Ausführungsbeispiel einzufüllen. Damit kann die Kühlvorrichtung 20 einer Transportvorrichtung 10 gemäß dem dritten Ausführungsbeispiel aktiviert werden.

Des Weiteren ist unterhalb der Transportfläche 110 eine Lage von Induktionsspulen 160 ausgebildet, welche ein magnetisches Wechselfeld oberhalb der Transportfläche 110 erzeugen können. Diese sind vorliegend als zusätzliche Wicklungen um die Elektromagnete 120 herum ausgeführt. Damit kann eine Kühlvorrichtung 20 einer Transportvorrichtung 10 gemäß dem vierten Ausführungsbeispiel mittels elektrischer Energie versorgt werden, so dass über das Peltierelement 60 eine Probe gekühlt werden kann.

Die Steuerungseinrichtung 200 ermittelt für eine jeweilige Probe in einem Probenträger 10, wie lange sich die Probe voraussichtlich auf der Transportfläche 110 aufhalten wird. Sofern dieser Wert zu groß ist, um eine weitgehend unveränderte Qualität der Probe garantieren zu können, aktiviert sie die jeweilige Kühlvorrichtung 20 der Transportvorrichtung 10 durch eine der weiter oben beschriebenen Maßnahmen. Sofern es sich beispielsweise um eine Transportvorrichtung 10 gemäß dem ersten Ausführungsbeispiel handelt, fährt die Steuerungseinrichtung 200 die Transportvorrichtung 10 zu dem Einfüllstutzen 130 und füllt eine Chemikalie in das Gefäß 30 ein. Wenn es sich um eine Transportvorrichtung 10 gemäß dem zweiten Ausführungsbeispiel handelt, fährt die Steuerungseinrichtung 200 die Transportvorrichtung 10 in die Kühlkammer 140 und aktiviert damit den Latentwärmespeicher 40. Wenn es sich bei der Transportvorrichtung 10 um eine Transportvorrichtung gemäß dem dritten Ausführungsbeispiel handelt, fährt die Steuerungseinrichtung diese zu der Befüllstation 150 und füllt flüssigen Stickstoff in das Gefäß 50 ein, um damit die Kühlvorrichtung 20 zu aktivieren. Wenn es sich bei der Transportvorrichtung 10 um eine Transportvorrichtung gemäß dem vierten Ausführungsbeispiel handelt, erzeugt die Steuerungseinrichtung 200 mittels der Induktionsspulen 160 ein elektromagnetisches Wechselfeld oberhalb der Transportfläche 110, so dass das Peltierelement 60 die Probe kühlt. Damit kann in vorteilhafter Weise eine längere Aufenthaltsdauer der Probe auf der Transportfläche 110 überbrückt werden, ohne dass chemische Änderungen in der Probe zu befürchten sind.

Es sei verstanden, dass ein Probenverteilungssystem 100 auch nur eines der gezeigten Mittel (130, 140, 150, 160) zum Aktivieren einer Kühlvorrichtung oder eine Auswahl von zwei oder drei der gezeigten Mittel (130, 140, 150, 160) aufweisen kann. Dies ist vorteilhafterweise mit der Art der verwendeten Transportvorrichtungen abzustimmen.

## Patentansprüche

1. Transportvorrichtung (10) zur Aufnahme eines Probenbehälters (19) und zum Transportieren des aufgenommenen Probenbehälters (19) zwischen präanalytischen, analytischen und/oder postanalytischen Stationen eines Laborautomatisierungssystems, aufweisend:
- mindestens ein magnetisch wirksames Element (14), das dazu ausgebildet ist, mit einem mittels mindestens eines elektromagnetischen Aktuators (120) erzeugten Magnetfeld derart wechselzuwirken, dass eine Antriebskraft auf die Transportvorrichtung (10) bewirkt wird, und
- eine Kühlvorrichtung (20), die dazu ausgebildet ist, einen in der Transportvorrichtung (10) aufgenommenen Probenbehälter (19) zu kühlen.

2. Transportvorrichtung (10) nach Anspruch 1, **dadurch gekennzeichnet, dass**
- die Kühlvorrichtung (20) einen Behälter (30) zur Aufnahme einer Substanz aufweist.

3. Transportvorrichtung (10) nach Anspruch 2, **dadurch gekennzeichnet, dass**
- die Substanz bei einer Reaktion Wärme aufnimmt.

4. Transportvorrichtung (10) nach einem der vorhergehenden Ansprüche, **dadurch gekennzeichnet, dass**
- die Kühlvorrichtung (20) einen Latentwärmespeicher (40) aufweist.

5. Transportvorrichtung (10) nach einem der vorhergehenden Ansprüche, **dadurch gekennzeichnet, dass**
- die Kühlvorrichtung (20) einen Behälter (50) zur Aufnahme einer kryogenen Flüssigkeit aufweist.

6. Transportvorrichtung (10) nach einem der vorhergehenden Ansprüche, **dadurch gekennzeichnet, dass**
- die Kühlvorrichtung (20) ein Peltierelement (60) sowie eine zugehörige Energieversorgungseinheit (62) aufweist.

7. Transportvorrichtung (10) nach Anspruch 6, **dadurch gekennzeichnet, dass**
- die Energieversorgungseinheit (62) eine Energieaufnahmeeinheit aufweist, die dazu ausgebildet ist, drahtlos Energie aufzunehmen.

8. Probenverteilungssystem (100), aufweisend:
- eine Anzahl von Transportvorrichtungen (10) nach einem der vorhergehenden Ansprüche,
- eine Transportfläche (110), die dazu ausgebildet ist, die Transportvorrichtungen (10) zu tragen,
- eine Anzahl von elektromagnetischen Aktuatoren (120), die stationär unter der Transportfläche (110) angeordnet sind, wobei die elektromagnetischen Aktuatoren (120) dazu ausgebildet sind, eine Transportvorrichtung (10), die auf der Transportfläche (110) angeordnet ist, durch Ausüben einer magnetischen Kraft auf die Transportvorrichtung (10) zu bewegen, und
- eine Steuerungseinrichtung (200), die dazu ausgebildet ist, die elektromagnetischen Aktuatoren (120) derart anzusteuern, dass sich eine jeweilige Transportvorrichtung (10) auf der Transportfläche (110) entlang einer vorgebbaren Bewegungsbahn bewegt.

9. Probenverteilungssystem (100) nach Anspruch 8, **dadurch gekennzeichnet, dass**
- das Probenverteilungssystem (110) eine Kühlkammer (140) zur Aufnahme von Transportvorrichtungen (10) aufweist, die dazu ausgebildet ist, darin enthaltene Transportvorrichtungen (10) und/oder deren Kühlvorrichtungen (20) zu kühlen.

10. Probenverteilungssystem (100) nach einem der Ansprüche 8 bis 9, **dadurch gekennzeichnet, dass**
- das Probenverteilungssystem (100) eine Energieübertragungseinheit (160) zum drahtlosen Übertragen von Energie auf eine Transportvorrichtung (10) aufweist.

11. Laborautomatisierungssystem, aufweisend:
- eine Anzahl von präanalytischen, analytischen und/oder postanalytischen Stationen, die dazu ausgebildet sind, Probenbehälter (19) und/oder Proben, die in den Probenbehältern (19) enthalten sind, zu bearbeiten, und
- ein Probenverteilungssystem (100) zum Transportieren der Probenbehälter (19) zwischen den präanalytischen, analytischen und/oder postanalytischen Stationen nach einem der Ansprüche 8 bis 10.

12. Laborautomatisierungssystem nach Anspruch 11, **dadurch gekennzeichnet, dass**
- die Steuerungseinrichtung (200) des Probenverteilungssystems (100) dazu ausgebildet ist, eine Wartezeit zu bestimmen, bis ein jeweiliger Probenbehälter (19) und/oder eine in dem jeweiligen Probenbehälter (19) enthaltene Probe mittels einer Station bearbeitbar ist,
- wobei das Probenverteilungssystem (100) Mittel (130, 140, 150, 160) zum Aktivieren der Kühlvorrichtung (20) einer Transportvorrichtung (100) aufweist, die von der Steuerungseinrichtung (200) betätigt werden, wenn die Wartezeit einen Schwellenwert übersteigt.
